# EUROPÄISCHE PATENTSCHRIFT

(11) **EP 0 966 546 B1**
(45) Veröffentlichungstag und Bekanntmachung des Hinweises auf die Patenterteilung: **17.10.2001**
(21) Anmeldenummer: 98909204.4
(22) Anmeldetag: 11.03.1998
(51) Int. Cl.: C21B 13/00

(54) **VERFAHREN UND EINRICHTUNG ZUM AUFBEREITEN VON REDUKTIONSGAS ZUR REDUKTION VON ERZEN**
METHOD AND DEVICE FOR PROCESSING REDUCING GAS FOR REDUCING ORES
PROCEDE ET INSTALLATION POUR TRAITER UN GAZ REDUCTEUR AFIN DE REDUIRE DES MINERAIS

(30) Priorität: 12.03.1997 AT 42497
(43) Veröffentlichungstag der Anmeldung: 29.12.1999
(73) Patentinhaber: VOEST-ALPINE INDUSTRIEANLAGENBAU GMBH, 4020 Linz (AT)
(72) Erfinder: ROSENFELLNER, Gerald, A-3352 St. Peter (AT)
(74) Vertreter: VA TECH Patente GmbH
(86) Internationale Anmeldenummer: AT9800064
(87) Internationale Veröffentlichungsnummer: WO9840521

(56) Entgegenhaltungen:
- DE-A- 2 413 558
- DE-A- 3 142 485
- GB-A- 2 188 066
- PATENT ABSTRACTS OF JAPAN vol. 005, no. 164 (C-076), 21.Oktober 1981 & JP 56 093805 A (CHIYODA CHEM ENG & CONSTR CO LTD;OTHERS: 01), 29.Juli 1981,

## Beschreibung

Die Erfindung betrifft ein Verfahren zur teilweisen, vorzugsweise vollständigen Reduktion von Erzen, insbesondere von Eisenerzen zu Eisen, wobei das Erz bei erhöhter Temperatur mit einem Reduktionsmittel, vorzugsweise einem kohlenstoffhaltigen Gas, in Kontakt gebracht wird.

In der DE 40 30 093 A1 wird ein Verfahren zur Direktreduktion von Eisenerz in einem Schachtofen mit einem Wasserstoff- und Kohlenmonoxid enthaltendem Reduktionsgas beschrieben. Aus dem Schachtofen abgezogenes Gichtgas wird mit einem methanreichen Gas vermischt und anschließend vermischt und das Gasgemisch in einem Reformer zu Reduktionsgas umgesetzt.

Die US 4,537,626 offenbart ein Verfahren, bei dem die aus einem Stahlkonverter abgezogenen Reduktionsgase in einem Wärmetauscher mit einem kohlenstoffhältigen Material wärmegetauscht werden und dann in einen metallurgischen Reduktionsreaktor eingebracht werden. Dieses Verfahren weist insbesondere den Nachteil auf, daß auf die Qualität des Reduktionsgases nach dem Austritt aus dem Konverter kein Einfluß genommen werden kann. Ein gleichmäßiger Reduktionsverlauf im Reduktionsreaktor ist daher nicht sichergestellt und dessen Produktqualität in der Folge starken Schwankungen unterworfen.

Die US 4,175,951 offenbart ein Verfahren zur Herstellung eines heißen Reduktionsgasstromes, bei dem ein vorerhitzter Reduktionsgasstrom mit den Produkten der Verbrennung eines gasförmigen Kohlenwasserstoffes vermischt wird. Da also sowohl für das Vorerhitzen des Reduktionsgases, als auch für die Erwärmung des Reduktionsgases auf die gewünschte Endtemperatur eine externe Brennstoffquelle erforderlich ist, ist dieses Verfahren von den laufenden Betriebskosten her als nachteilig zu beurteilen.

In der EP-A 0 041 861 ist ein mit festen Brennstoffen beheizter Wärmetauscher zur Erhitzung von Gasen beschrieben, bei dem die Verbrennungsgase jedoch mit dem aufzuheizenden Gas vermischt werden. Nachteilig bei dieser Einrichtung ist jedoch, daß es zu der erwähnten Vermischung der Gase kommt.

Die EP-A 0 633 445 beschreibt einen Gas-Gas-Rohrbündelwärmetauscher für hohe Temperaturen, bei dem durch Entfernen der Kappe das Rohrbündel getauscht werden kann. Nachteilig ist auch, daß auch bei diesem System die Gase gemischt werden.

In der WO 94/10512 wird ein Gaserhitzer beschrieben, bei dem besonderer Wert auf die Reinerhaltung der Gase gelegt wird. Die Erhitzung der Gase wird aufgrund einer beheizten perforierten Prallscheibe, die temperaturgeregelt ausgeführt ist, bewerkstelligt. Nachteilig bei dieser Einrichtung ist, daß der Erhitzer für geringe Mengen an mit Spurenelementen dotierten Gasen konzipiert ist.

In der EP-A 0 056 603 ist ein Winderhitzer für Hochofenprozesse beschrieben, der mit einem keramischen feuerfesten Material ausgekleidet ist, das eine hohe chemische wie thermische Festigkeit aufweist. Nachteilig bei dieser Einrichtung ist es, daß der Winderhitzer konstruktionsbedingt eine hohe thermische Trägheit aufweist.

Aus der DE-C 32 13 204 sind Wärmetauscher, vorzugsweise zum Kühlen von Rauchgas mit Böden und Rohren aus hochtemperaturbeständigen Werkstoffen bekannt, bei denen die Austauschrohre in Längsrichtung ausgerichtet sind. Der Tragboden besteht aus Beton und die Rohre stecken in einem in der Längsrichtung verschiebbaren Boden. Der Wärmetauscher wird im Gegenstrom betrieben und der Führungsboden ist beweglich gelagert, um die Dehnung der Rohre über der Temperatur abzufangen. Die Ausrührung in zwar hochfesten Materialien, jedoch in Eisenwerkstoffen, neigt sowohl zur Korrosion wie Abrasion.

Die DE-C 31 42 485 behandelt einen Glasrohrwärmetauscher zur Kühlung von aggressiven heißen Rauchgasen, wobei die Glasrohrbündel vom Rauchgas quer, durch seitlich angeordnete Schlitze angeströmt werden. Der Querschnitt der Eintrittsschlitze ist zwar veränderbar ausgeführt, jedoch kann das System nur schwer zum Aufheizen der erwähnten Gase eingesetzt werden.

In der DE-C 33 33 057 wird ein ebenfalls aus Glasrohren bestehender Wärmetauscher vorgeschlagen, bei dem die Glasrohre quer angeströmt werden und dessen Gehäuse doppelwandig ausgeführt ist. In dem Hohlraum der Außenwand sind Heizelemente eingebaut, die eine Kondensation leichtflüchtiger Komponenten hintanhalten. Diese Einrichtung ist jedoch nicht zum Aufheizen für Gase in den geforderten Bereichen geeignet

Bei einem derzeitigen Verfahren wird das Reduktionsgas vor dem Einspeisen in den Reduktionsbehälter auf die geforderte Reaktionstemperatur gebracht. Dies geschieht derzeit durch metallische Wärmetauscher, die zum Teil als Wegwerfwärmetauscher ausgeführt werden. Bei hohen Gehalten an CO besteht bei den konventionellen Ausführungen das Problem, daß durch den Zerfall des CO sich im Werkstoff Karbide bilden, die über der Sättigungskonzentration zu einer Zerstörung des Werkstoffes führen. Auch bei hoch H₂-haltigen Reduktionsgasen tritt eine Werkstoffzerstörung auf. Im konventionellen Design der Anlagen wird dieses Problem durch eine Teilverbrennung des Reduktionsgases gelöst, was jedoch eine Qualitätseinbuße für das Reduktionsgas bedeutet.

Das bedeutet somit, daß derzeit mit den Wärmetauschern aus Eisenwerkstoffen es nahezu unmöglich ist, gewisse Temperaturbereiche zu überschreiten und Oxidationspotentiale zu unterschreiten, da dadurch der Verschleiß die industriellen Toleranzen überschreitet. Darüber hinaus stellen die derzeitigen Wärmetauscher ein Sicherheitsproblem dar.

Die Aufgabe der Erfindung ist es daher, ein Verfahren zu schaffen, das die Nachteile der obigen Verfahren vermeidet und das bei gegebener Erzqualität den Reduktionsprozeß optimiert.

Die Erfindung wird dadurch gelöst, daß vor der Kontaktierung des Erzes mit dem Reduktionsgas ein Teilstrom des Reduktionsgases abgetrennt und oxidiert wird, der Druckverlust auf den Druck des anderen Teilstromes ausgeglichen wird, daß weiters bei dem anderen Teilstrom des Reduktionsgases gegebenenfalls die Temperatur und/oder der Druck eingestellt wird bzw. werden und die beiden Teilströme vereinigt und gemeinsam dem zu reduzierenden Erz zugeführt werden, wobei das Reduktionspotential des Reduktionsgases durch die Oxidation des Teilstromes und/oder durch die Temperatur des Reduktionsgases und/oder durch Zumischung eines Gases eingestellt werden kann.

Durch diese Erfindung ist es erstmals möglich, bei gegebener Erzqualität, den Reduktiosnprozeß in Richtung seines stöchiometrischen Optimums zu fahren. Ein entscheidenes Kriterium ist die materialtechnische Wahl des Wärmetauschers, da sich der katalytische Einfluß der Oberfläche nachteilig auswirkt. Dadurch kann die Produktionsleistung im Extremfall um bis zu 30 % gesteigert werden. Ein weiterer Vorteil liegt darin, daß das Reduktionsgas mit sehr niedrigem Oxidantenanteil auf eine gewünschte Temperatur aufheizbar ist, sodaß die Gasanalyse in weiten Bereichen eingestellt werden kann

Nach einem Merkmal der Erfindung wird der Massenfluß der Teilströme bzw. der Gaszumischung im Bereich von 0 - 100 % geregelt. Durch diese Bandbreite kann optimal auf die gesamte Varianz der eingesetzten Gasqualitäten reagiert werden.

Eine Einrichtung zur Durchführung des enfindungsgemäßen Verfahrens, mit einer zu einem Reduktionsreaktor führenden Zuleitung für Reduktionsgas und mit einer Brennkammer zur Oxidation eines Teiles des Reduktionsgases ist dadurch gekennzeichnet, daß von der Zuleitung eine Bypassleitung mit einen Regelventil und der Brennkammer abzweigt und nach der Abzweigung in der Zuleitung ein Gassensor, ein Regelventil und ein Wärmetauscher aus einem Nichteisenbasiswerkstoff zum Temperieren des Reduktionsgases angeordnet sind und beide Leitungen zusammengeführt sind und nach der Zusammenführung und vor der Einmündungs in den Reduktionsreaktor, vorzugsweise einen Reduktionsschachtofen, eine Zuleitung für ein Gas und gegebenenfalls ein weiterer Gassensor vorgesehen ist bzw. sind. Durch diese Anordnung kann die Regelung des Prozesses aufgrund der On-Line-Überwachung optimal gefahren werden.

Nach einem weiteren Merkmal der Erfindung sind die vom Reduktionsgas berührten Teile des Wärmetauschers in Glas ausgeführt Durch die Ausführung des Wärmetauschers in Glas ist gewährleistet, daß weder ein nennenswerter Abrieb des Materials, noch ein störender katalytischer Einfluß der Oberfläche zu erwarten ist. Bestimmte oberflächenbeschichtete Werkstoffe gelten als Nichteisenbasiswerkstoffe, nämlich solche, die die Differenz der Oxidationspotentiale im Hinblick auf Metall-Dusting beherrschen. Nach einer Ausgestaltung der Erfindung sind über die Gassensoren die Massenströme und/oder das Reduktionspotential des Reduktionsgases regelbar. Auch diese Ausgestaltung ist zur Optimierung von immensem Vorteil Dabei wird die Reduktionsgasanalyse bei frei eingestellter Reduktionsgastemperatur geregelt, bzw. umgekehrt.

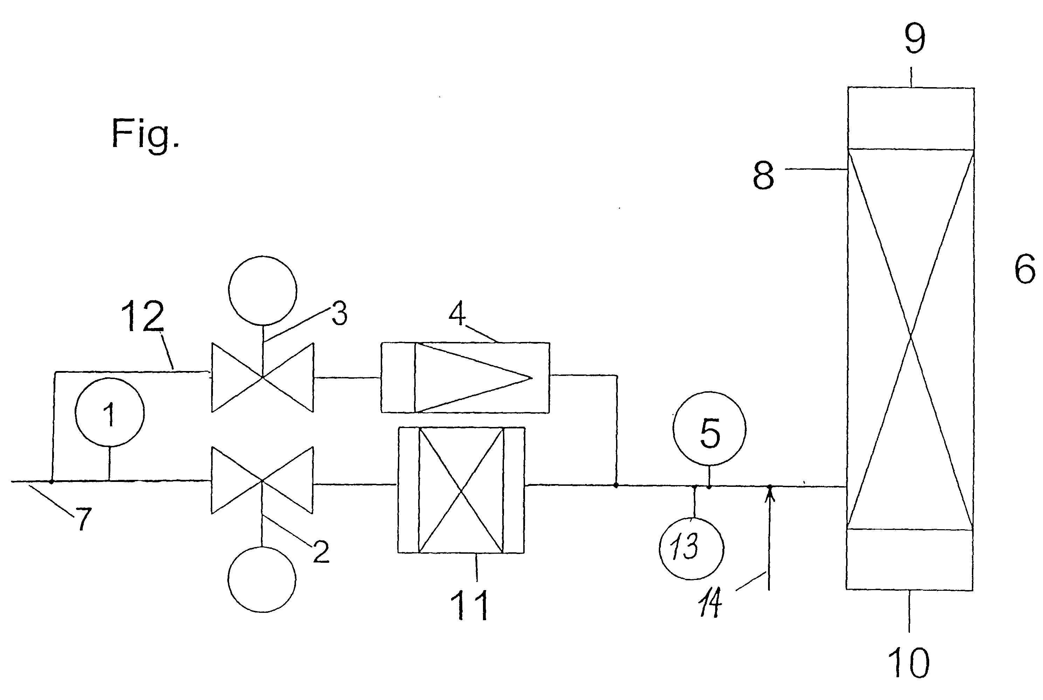

Die Erfindung wird anhand eines in der Zeichnung dargestellten Verfahrensfließbildes näher erläutert.

In der Fig. wird das Reduktionsgas 7 mittels der Gassensorik 1 analysiert und in zwei Teilströme aufgeteilt. Der Massenstrom des Teilstromes, der oxidiert wird, wird mittels des Regelventils 3 geregelt und gelangt dann zum Brenner 4, wo oxidiert wird. Der andere Teilstrom des Reduktionsgases 7 wird mittels des Regelventils 2 gemäß der erforderlichen Gasmenge am Schacht geregelt und wird danach im Wärmetauscher 11 auf die geforderte Temperatur gebracht, mit dem oxidierten Teilstrom des Reduktionsgases vereint. Mittels des Gassensors 13 werden die Gaskomponenten bestimmt und gegebenenfalls über mathematische Ansätze die Gaszuführung 14 festgelegt.

Über den Gassensor 5 wird die Temperatur erfaßt und der Regelkreis entsprechend eingestellt Das Reduktionsgas wird dann dem Reduktionsbehälter 6 zugeführt. Das abreagierte Gas 8 verläßt den Reduktionsbehälter 6 am Kopf. Das Einsatzmaterial 9 wird am Kopf des Reduktionsbehälters 6, mit dem optimierten Reduktionsgas in engen Kontakt gebracht und als reagiertes Erz 10 bzw Eisenschwamm abgezogen.

Der über den Gassensor 5 einstellbare Regler wirkt auf das Regelventil 3 bei dieser Ausführungsform.

Der Gassensor 13 kann auch nach der Gaszuführung 14 vorgesehen sein, wobei dann über die gemessenen Werte die Gaszuführung eingestellt wird.

## Patentansprüche

1. Verfahren zur Reduktion von Metallerz, insbesondere Eisenerz, wobei das Erz bei erhöhter Temperatur mit einem aufbereiteten, vorzugsweise kohlenstoffhaltigen Reduktionsgas in Kontakt gebracht wird, **dadurch gekennzeichnet, daß** von dem Reduktionsgas vor dem erwähnten Kontaktieren ein Teilstrom abgetrennt und oxidiert wird, der Druckverlust auf den Druck des anderen Teilstromes ausgeglichen wird, gegebenenfalls Temperatur und/oder Druck des anderen Teilstromes eingestellt wird bzw. werden, und die beiden Teilströme vereinigt und gemeinsam dem zu reduzierenden Erz zugeführt werden, wobei das Reduktionspotential des Reduktionsgases- durch die Oxidation des Teilstromes, die Temperatur des Reduktionsgases und durch Zumischen eines Gases eingestellt werden kann.

2. Verfahren nach Anspruch 1, **dadurch gekennzeichnet, daß** der Massenfluß der Teilströme bzw. der Gaszumischung im Bereich von 0 - 100% geregelt wird.

3. , Enrichtung zur Durchführung des Verfahrens nach Anspruch 1 oder 2, mit einer zu einem Reduktionsreaktor (6) führenden Zuleitung (7) für Reduktionsgas und mit einer Brennkammer (4) zur Oxidation eines Teiles des Reduktionsgases, **dadurch gekennzeichnet, daß** von der Zuleitung (7) eine Bypassleitung (12) mit einem Regelventil (3) und der Brennkammer (4) abzweigt und nach der Abzweigung in der Zuleitung (7) ein Gassensor (1), ein Regelventil (2) und ein - in einem Nichteisenbasiswerkstoff ausgeführter - Wärmetauscher (11) angeordnet sind und beide Leitungen (7,12) zusammengeführt sind und nach der Zusammenführung und vor der Einmündung in den Reduktionsreaktor (6) eine Zuleitung (14) für Gas und gegebenenfalls ein weiterer Gassensor (5) vorgesehen ist bzw. sind.

4. Einrichtung nach Anspruch 3, **dadurch gekennzeichnet, daß** dei vom Reduktionsgas berührten Teile des Wärmetauschers in Glas ausgeführt sind.

5. Einrichtung nach einem der Ansprüche 3 odr 4, **dadurch gekennzeichnet, daß** durch den Gassensor (1) und/oder den Gassensor (5) die Massenströme und das Reduktionspotential des Reduktionsgases regelbar sind.

## Claims

1. Process for the reduction of metal ore, in particular iron ore, the ore being brought into contact, at elevated temperature, with a prepared, preferably carbon-containing reduction gas, **characterized in that**, prior to this contact, a partial stream is separated off from the reduction gas and is oxidized, the pressure loss is compensated to the pressure of the other partial stream, if appropriate the temperature and/or pressure of the other partial stream is/are set, and the two partial streams are combined and together are fed to the ore which is to be reduced, it being possible to set the reduction potential of the reduction gas by means of the oxidation of the partial stream, the temperature of the reduction gas and by admixing a gas.

2. Process according to Claim 1, **characterized in that** the mass flow of the partial streams or of the gas admixture is regulated in the range from 0-100%.

3. Device for carrying out the process according to Claim 1 or 2, having a feed line (7) for reduction gas which leads to a reduction reactor (6) and having a combustion chamber (4) for oxidation of a part of the reduction gas, **characterized in that** a bypass line (12) with a control valve (3) and the combustion chamber (4) branches off from the feed line (7) and, after the branching, a gas sensor (1), a control valve (2) and a heat exchanger (11) - which is made from a non-ferrous base material - are arranged in the feed line (7) and the two lines (7, 12) are combined and, after being combined and before opening into the reduction reactor (6), a feed line (14) for gas and, if appropriate, a further gas sensor (5) is/are provided.

4. Device according to Claim 3, **characterized in that** those parts of the heat exchanger which come into contact with the reduction gas are made from glass.

5. Device according to one of Claims 3 or 4, **characterized in that** the mass flows and the reduction potential of the reduction gas can be regulated by means of the gas sensor (1) and/or the gas sensor (5).

## Revendications

1. Procédé de réduction d'un minerai métallique, en particulier de minerai de fer, le minerai étant mis en contact à température élevée avec un gaz de réduction apprêté, contenant, de préférence, du carbone, **caractérisé en ce que** qu'avant la mise en contact mentionnée, un courant partiel est séparé du gaz de réduction et est oxydé, **en ce que** la perte de pression est équilibrée sur la pression de l'autre courant partiel, **en ce que**, le cas échéant, la température et/ou la pression de l'autre courant partiel est ajustée et **en ce que** les deux courants partiels sont réunis et acheminés conjointement en direction du minerai à réduire, le potentiel de réduction du gaz de réduction pouvant être réglé par l'oxydation du courant partiel, par la température du gaz de réduction et par l'addition par mélange d'un gaz.

2. Procédé selon la revendication 1, **caractérisé en ce que** le flux massique des courants partiels ou du mélange de gaz est réglé dans le domaine de 0-100%.

3. Équipement en vue de l'exécution du procédé selon la revendication 1 ou 2, avec un conduit d'amenée (7) conduisant à un réacteur de réduction (6) pour le gaz de réduction et avec une chambre de combustion (4) en vue de l'oxydation d'une partie du gaz de réduction, **caractérisé en ce que** du conduit (7) émerge un conduit de dérivation (12), ayant une vanne de régulation (3) et une chambre de combustion (4), et **en ce qu'**après la dérivation dans le conduit (7), l'on dispose un détecteur de gaz (1), une vanne de régulation (2) et un échangeur thermique (11) - exécuté en un matériau à base de nickel - et **en ce que** les deux conduits (7, 12) sont joints ensemble et **en ce qu'**après la jonction et avant l'embouchure dans le réacteur de réduction (6), l'on prévoit un conduit (14) pour le gaz et, le cas échéant, un détecteur de gaz supplémentaire (5).

4. Équipement selon la revendication 3, **caractérisé en ce que** l'on exécute en verre les parties de l'échangeur thermique qui entrent en contact avec le gaz de réduction.

5. Équipement selon l'une des revendications 3 ou 4, **caractérisé en ce que** les flux massiques et le potentiel de réduction du gaz. de réduction sont réglables par l'intermédiaire du détecteur de gaz (1) et/ou du détecteur de gaz (5).
